# FASCICULE DE BREVET EUROPEEN

(11) **EP 1 375 350 B1**
(45) Date de publication et mention de la délivrance du brevet: **09.03.2005**
(21) Numéro de dépôt: 03291276.8
(22) Date de dépôt: 28.05.2003
(51) Int. Cl.: B64D 45/00, E06B 5/12

(54) **Porte à ouverture rapide**
Rasch öffnende Tür
Rapidly opening door

(30) Priorité: 26.06.2002 FR 0207900
(43) Date de publication de la demande: 02.01.2004
(73) Titulaire: AIRBUS France, 31060 Toulouse (FR)
(72) Inventeur: Barbara, Olivier, 31530 Merenvielle (FR); Viala, Stéphane, 31700 Cornebarrieu (FR)
(74) Mandataire: Bonnetat, Christian

(56) Documents cités:
- WO-A-84/01404
- WO-A-89/04907
- US-A- 5 822 924
- NORRIS G: "DECOMPRESSION RISK IS MAIN HURDLE IN BID TO DESIGN SECURE COCKPIT DOOR BARRIER MUST WITHSTAND RAMMING FORCE OF 136KG FOOD TROLLEY BUT OPEN IN EVENT OF A PRESSURE LOSS" FLIGHT INTERNATIONAL, REED BUSINESS INFORMATION, HAYWARDS HEATH, GB, vol. 160, no. 4802, 16 octobre 2001 (2001-10-16), page 18 XP001100398 ISSN: 0015-3710

## Description

La présente invention concerne une porte d'aéronef à ouverture rapide, lorsque ses deux faces sont soumises à des pressions brusquement très différentes, pour éviter les dégâts matériels dus à une brusque décompression d'un espace dudit aéronef.

On sait que les avions civils commerciaux volent à des altitudes élevées, où règnent de très faibles pressions, de sorte qu'il est nécessaire de pressuriser en vol certains espaces de ces avions, tels que la cabine des passagers, la cabine de pilotage ou certaines soutes, afin d'éviter les conséquences de ces faibles pressions sur les êtres humains et le fret.

Cependant, en vol, il peut se produire une brutale décompression de l'un ou plusieurs de ces espaces pressurisés, engendrant des dégâts matériels importants dans l'avion.

Ces dégâts matériels sont causés par la différence de pression régnant entre les espaces pressurisés de l'avion et ceux qui se trouvent dépressurisé. Les structures sont alors soumises à des efforts très importants non prévus, qui peuvent entraîner des désordres dans lesdites structures pouvant aller jusqu'à la rupture.

Différentes solutions ont été imaginées pour éviter de tels dégâts. A titre d'exemple, on peut citer le document FR-2 306 877 (US 4 703 908). Ces solutions consistent généralement en des dispositifs permettant d'annuler ou de limiter les différences de pression entre les différents espaces.

Il existe différentes causes pouvant occasionner une dépressurisation brutale de la cabine des passagers, de la cabine de pilotage ou des soutes pressurisées. Par exemple, une porte mal fermée peut s'ouvrir en vol, un hublot ou un élément de pare-brise peut se rompre ou une ouverture peut se produire dans la structure à la suite d'un impact ou d'une explosion.

Une brèche dans la cabine de pilotage, quelle qu'en soit son origine (impact, explosion), produit une dépressurisation immédiate de ladite cabine de pilotage. La forte différence de pression qui s'établi alors entre la cabine de pilotage et la cabine des passagers engendre des efforts sur les structures existant entre ces deux cabines, telles que porte et cloisons. Or, ces structures, pour des raisons de masse (notamment les cloisons) ne sont pas dimensionnées pour supporter de tels efforts. De plus, la porte séparant lesdites cabines étant le plus souvent fermée pour des raisons de sécurité, elle ne peut s'ouvrir, sous l'effet de la forte différence de pression, qu'avec une vitesse d'ouverture insuffisamment rapide pour équilibrer rapidement les pressions, ce qui pourrait endommager lesdites structures.

L'objet de la présente invention est de remédier à cet inconvénient en permettant d'accélérer l'ouverture d'une telle porte d'aéronef.

A cette fin, selon l'invention, la porte obturant une ouverture pratiquée dans une paroi dans un aéronef séparant un premier et un second espaces dans lesquels règnent des pressions au moins approximativement égales, la pression dans ledit second espace pouvant brutalement s'abaisser à une valeur très basse et ladite porte étant articulée le long de l'un de ses chants à un côté de ladite ouverture, est remarquable en ce qu'elle porte, sur sa face dirigée vers ledit premier espace et au voisinage du chant libre de ladite porte opposé audit chant d'articulation, au moins une aile en saillie par rapport à ladite face dirigée vers ledit premier espace.

En effet, la demanderesse a trouvé que la relative lenteur d'ouverture d'une porte entre de tels espaces, dans le cas où l'un d'eux est soumis à une décompression brutale, provenait d'un phénomène de contournement de la porte par des courants gazeux tendant à équilibrer temporairement les pressions sur les deux faces de la porte. Un tel équilibrage prématuré des pressions sur la porte ralentit l'ouverture de cette dernière, ce qui retarde l'équilibrage global des pressions entre lesdits premier et second espaces et prolonge les efforts, appliqués sur les structures environnantes entraînant des détériorations, ou même une destruction, de ces dernières.

En revanche, grâce à la présente invention, ladite aile s'oppose à l'équilibrage des pressions sur les deux faces de la porte par contournement, de sorte que la pression régnant dans ledit premier espace s'applique plus longtemps sur ladite porte, ce qui permet une ouverture rapide de celle-ci en direction dudit second espace.

Selon des particularités avantageuses de la présente invention, on peut citer :
- ladite aile saillante est parallèle audit chant libre de la porte ;
- la distance séparant ladite aile saillante dudit chant libre est au plus égale à la hauteur de ladite aile saillante par rapport à ladite face dirigée vers ledit premier espace ;
- ladite aile saillante s'étend sur toute la dimension de la porte parallèle audit chant libre ; et
- ladite aile saillante est au moins approximativement orthogonale à ladite face dirigée vers ledit premier espace.

De préférence, ladite aile saillante appartient à une cornière dont l'autre aile est appliquée contre ladite face dirigée vers ledit premier espace et sert à la fixation de ladite cornière sur ladite porte.

Ainsi, en plus d'accélérer l'ouverture de ladite porte, ladite cornière renforce la résistance mécanique de cette dernière, de sorte que ladite porte subit moins de dommages.

Bien entendu, la présente invention et ses avantages sont indépendants de la direction de l'axe d'articulation de la porte, qui peut, par exemple, être horizontal ou vertical. Cependant, dans l'exemple décrit ci-après en regard des figures, la porte est articulée autour d'un axe vertical, comme cela est le cas pour une porte séparant, dans un avion, la cabine de pilotage de la cabine des passagers.

Les figures du dessin annexé feront bien comprendre comment l'invention peut être réalisée. Sur ces figures, des références identiques désignent des éléments semblables.
La figure 1 illustre, en perspective et en position partiellement ouverte, une porte conforme à la présente invention.
La figure 2 est une coupe, partielle et schématique, suivant la ligne II-II de la figure 1.
La figure 3 montre, en coupe et à plus grande échelle, l'extrémité libre de la porte des figures 1 et 2.
La figure 4 illustre, en vue semblable à la figure 2, une porte identique à celle des figures 1 et 2, mais non pourvue du perfectionnement selon l'invention.
La figure 5 illustre, en vue semblable à la figure 2, une variante de réalisation de la porte conforme à la présente invention.
La figure 6 montre, en coupe et à plus grande échelle, l'extrémité libre de la porte de la figure 5.
La figure 7 est un diagramme numérique permettant de comparer les comportements des portes des figures 2, 4 et 5 en cas de décompression brutale.

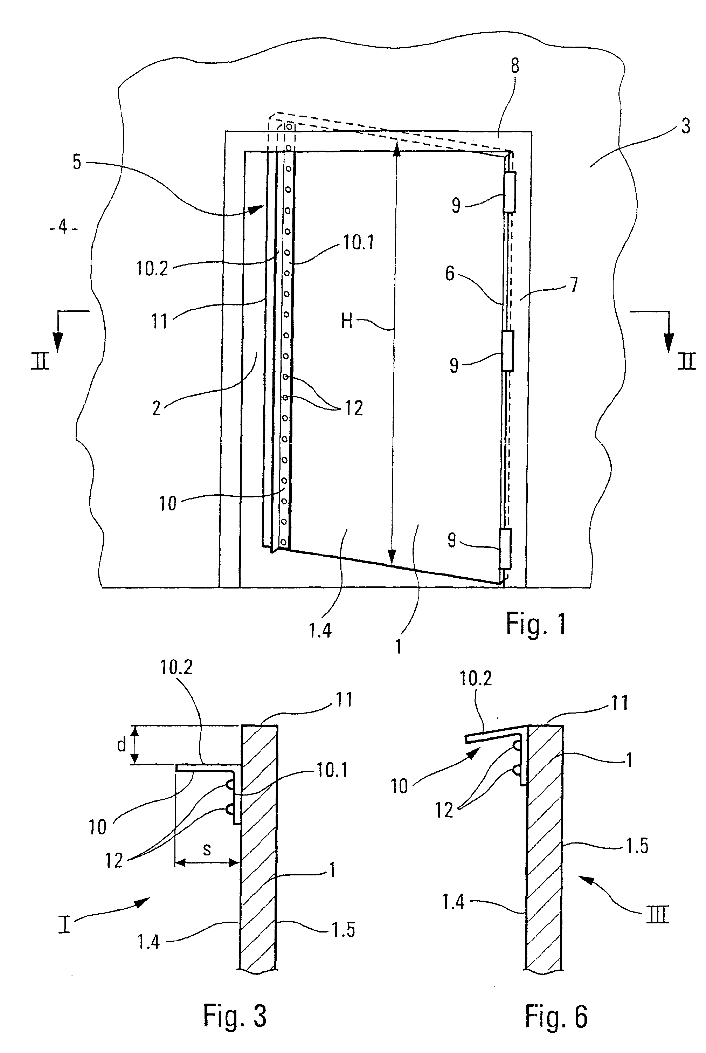

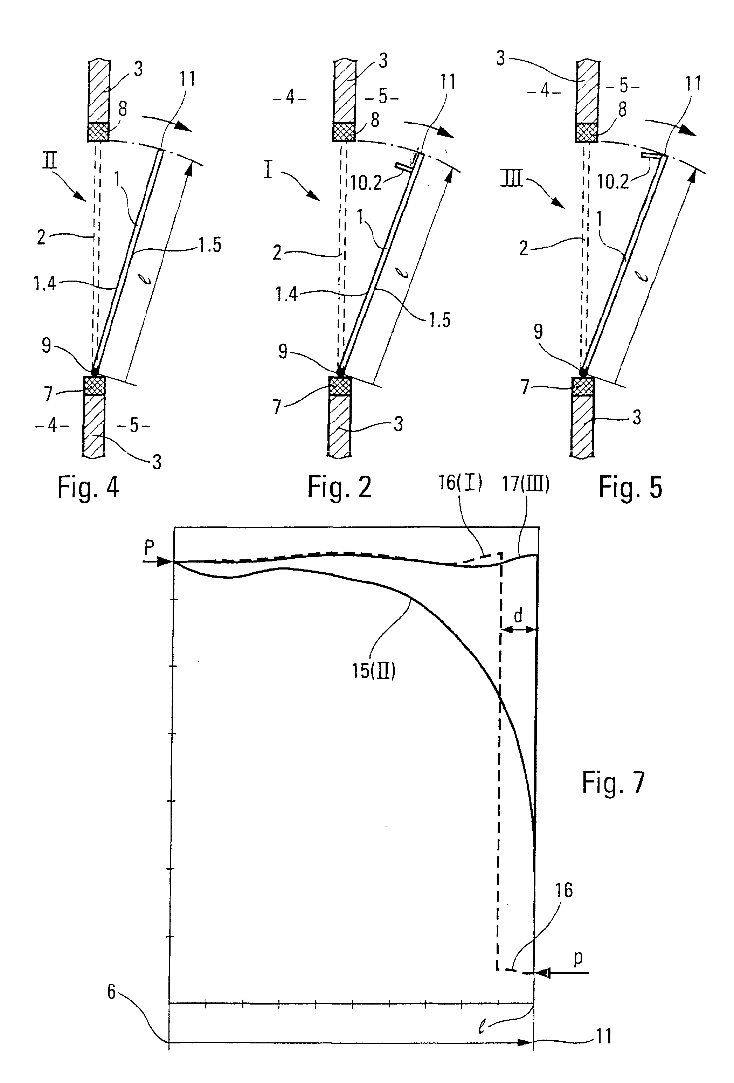

La porte 1, représentée légèrement ouverte sur les figures 1 et 2, est destinée à obturer une ouverture 2, prévue dans une paroi 3. La paroi 3 sépare l'un de l'autre des espaces 4 et 5, dans lesquels règnent des pressions au moins approximativement égales. La porte 1 comporte donc, lorsqu'elle est fermée en obturant l'ouverture 2, une face 1.4 dirigée vers l'espace 4 et une face 1.5 dirigée vers l'espace 5.

La porte 4 est articulée le long de son chant 6 à un montant 7 de son chambranle 8, délimitant l'ouverture 2 dans la paroi 3. A cet effet, des charnières 9 sont disposées entre le chant d'articulation 6 et le montant 7. Dans l'exemple représenté sur les dessins, ledit chant d'articulation 6 et le montant 7 sont verticaux et la porte 1 présente une hauteur indiquée par la référence H. La largeur (horizontale) de ladite porte 1 est désignée par ℓ.

Comme cela est indiqué ci-dessus, on suppose que la pression dans l'espace 5 peut accidentellement et brutalement s'abaisser à une valeur très basse, par exemple celle que l'on rencontre à l'altitude de vol de croisière des avions modernes, et on cherche à minimiser les effets d'une telle chute de pression, lorsque celle-ci se produit alors que la porte 1 est fermée, en séparant l'un de l'autre les espaces 4 et 5.

Pour ce faire, dans le mode de réalisation représenté sur les figures 1, 2 et 3, on a fixé une cornière 10 sur la face 1.4 de la porte 1, au voisinage du chant libre 11 opposé audit chant d'articulation 6. La cornière 10 comporte une aile 10.1 appliquée sur ladite face 1.4 et fixée à la porte 1 par des moyens de fixation 12, par exemple des vis.

L'autre aile 10.2 de la cornière 10 est orthogonale et en saillie par rapport à ladite face 1.4. Elle est parallèle audit chant libre 11 et elle s'étend sur toute la hauteur H de la porte 1. La distance d séparant ladite aile 10.2 du chant libre 11 est, de préférence, au plus égale à la hauteur s de la saillie de ladite aile 10.2 par rapport à ladite face 1.4.

Pour juger des performances de la présente invention, on a comparé l'agencement de porte des figures 1, 2 et 3, désigné par la référence I sur la figure 2, avec un agencement de porte identique (représenté sur la figure 4 et désigné par II), mais ne comportant pas l'aile saillante 10.2, et on a dessiné le diagramme de la figure 7. Sur ce diagramme, l'axe des abscisses représente une distance horizontale parallèle à la largeur de la porte 1, l'origine des abscisses correspondant au chant d'articulation 6 alors que l'abscisse ℓ correspond au chant libre 11. En ordonnées, on a représenté les variations de pression sur la face 1.4 des agencements de portes I et II, la pression P correspondant à la pressurisation des espaces 4 et 5 avant décompression dans l'espace 5 et la pression p correspondant à la pression dans ledit espace 5 après décompression. De plus, le diagramme de la figure 7 correspond à une ouverture des portes d'environ 45°.

Si on examine la courbe 15 de ce diagramme, qui correspond à l'agencement de porte II, on constate qu'à partir de la moitié (approximativement) de la largeur ℓ de la porte 1 de cet agencement, la pression appliquée sur la face 1.4 de celle-ci chute en tendant vers la pression p dans l'espace dépressurisé 5, ce qui, comme expliqué ci-dessus, est dû au phénomène de contournement tendant à équilibrer rapidement les pressions des deux côtés de la porte et ralentit l'ouverture de celle-ci.

En revanche, la courbe 16 du diagramme de la figure 7, qui correspond à l'agencement de porte I conforme à la présente invention, montre que la pression P sur la face 1.4 reste quasiment constante sur toute la largeur ℓ de la porte 1 et qu'elle chute brutalement derrière l'endroit où se trouve l'aile saillante 10.2. La pression P régnant dans l'espace 4 reste appliquée sur une portion de porte plus grande que l'agencement de porte II, ce qui permet de conserver, pendant l'ouverture de la porte 1, un moment de pression important appliqué sur ladite porte, et favorise donc une vitesse importante d'ouverture de celle-ci. Les structures environnantes ne sont alors soumises aux efforts de pression que pendant une durée plus courte.

Par ailleurs, sur les figures 5 et 6, on a représenté une variante de réalisation III de la présente invention, dans laquelle la cornière 10 est fixée à proximité immédiate du chant libre 11 (d=0). De plus, afin de ne pas gêner l'ouverture de la porte 1, l'aile 10.2 est légèrement rabattue vers la porte, de sorte que l'angle entre cette aile 10.2 et la porte 1 est inférieur à 90°, par exemple égal à 87°. La répartition de pression sur la face 1.4 de cette porte est représentée par la courbe 17 de la figure 7. On peut y constater que, en cas de décompression dans l'espace 5, il n'y a plus de chute de pression sur la face 1.4. La pression reste constante très longtemps sur cette face, ce qui permet d'obtenir une vitesse élevée d'ouverture de porte.

## Revendications

1. Porte d'aéronef (1) obturant une ouverture (2) pratiquée dans une paroi (3) dans un aéronef, ladite paroi (3) séparant un premier (4) et un second (5) espaces dans lesquels règnent des pressions au moins approximativement égales, la pression dans ledit second espace (5) pouvant accidentellement et brutalement s'abaisser à une valeur très basse et ladite porte (1) étant articulée le long de l'un de ses chants (6) à un côté (7) de ladite ouverture (2),
**caractérisée en ce qu'**elle porte, sur la face (1.4) dirigée vers ledit premier espace (4) et au voisinage du chant libre (11) de ladite porte (1) opposé audit chant d'articulation (6), au moins une aile (10.2) en saillie par rapport à ladite face (1.4) dirigée vers ledit premier espace (4).

2. Porte d'aéronef selon la revendication 1,
**caractérisée en ce que** ladite aile saillante (10.2) est parallèle audit chant libre (11).

3. Porte d'aéronef selon l'une des revendications 1 ou 2,
**caractérisée en ce que** la distance (d) séparant ladite aile saillante (10.2) dudit chant libre (11) est au plus égale à la hauteur (s) de ladite aile saillante (10.2) par rapport à ladite face (1.4) dirigée vers ledit premier espace (4).

4. Porte d'aéronef selon l'une des revendications 1 à 3,
**caractérisée en ce que** ladite aile saillante (10.2) s'étend sur toute la dimension (H) de la porte (1) parallèle audit chant libre (11).

5. Porte d'aéronef selon l'une des revendications 1 à 4,
**caractérisée en ce que** ladite aile saillante (10.2) est au moins approximativement orthogonale à ladite face (1.4) dirigée vers ledit premier espace (4).

6. Porte d'aéronef selon l'une des revendications 1 à 5,
**caractérisée en ce que** ladite aile saillante (10.2) appartient à une cornière (10) dont l'autre aile (10.1) est appliquée contre ladite face (1.4) dirigée vers ledit premier espace (4) et sert à la fixation de ladite cornière (10) sur ladite porte (1).

## Patentansprüche

1. Flugzeugtür (1), die eine Öffnung (2) verschließt, die in einer Wand (3) in einem Flugzeug eingelassen ist, wobei die Wand (3) einen ersten (4) und einen zweiten Raum (5) voneinander trennt, in denen Drücke vorherrschen, die zumindest annähernd gleich sind, wobei der Druck im zweiten Raum (5) überraschend und plötzlich auf einen sehr niedrigen Wert abfallen kann und die Tür (1) entlang einer ihrer Kanten (6) an einer Seite (7) der Öffnung (2) angelenkt ist,
**dadurch gekennzeichnet, dass** sie auf der dem ersten Raum (4) zugewandten Fläche (1.4) und in der Nähe der freien Kante (11) der Tür (1), die der angelenkten Kante (6) gegenüberliegt, mindestens einen Flügel (10.2) aufweist, der in Bezug zu der dem ersten Raum (4) zugewandten Fläche (1.4) hervorsteht.

2. Flugzeugtür gemäß Anspruch 1,
**dadurch gekennzeichnet, dass** der vorstehende Flügel (10.2) parallel zur freien Kante (11) ist.

3. Flugzeugtür gemäß einem der Ansprüche 1 oder 2,
**dadurch gekennzeichnet, dass** der Abstand (d), der den vorstehenden Flügel (10.2) von der freien Kante (11) trennt, mindestens gleich der Höhe (s) des vorstehenden Flügels (10.2) in Bezug zu der dem ersten Raum (4) zugewandten Fläche (1.4) ist.

4. Flugzeugtür gemäß einem der Ansprüche 1 bis 3,
**dadurch gekennzeichnet, dass** sich der vorstehende Flügel (10.2) über die ganze Länge (H) der Tür (1) erstreckt, die parallel zur freien Kante (11) ist.

5. Flugzeugtür gemäß einem der Ansprüche 1 bis 4,
**dadurch gekennzeichnet, dass** der vorstehende Flügel (10.2) zumindest annähernd orthogonal zu der dem ersten Raum (4) zugewandten Fläche (1.4) ist.

6. Flugzeugtür gemäß einem der Ansprüche 1 bis 5,
**dadurch gekennzeichnet, dass** der vorstehende Flügel (10.2) zu einem Winkelprofil (10) gehört, dessen anderer Flügel (10.1) an der dem ersten Raum (4) zugewandten Fläche (1.4) angebracht ist und dem Befestigen des Winkelprofils (10) an der Tür (1) dient.

## Claims

1. Aircraft door (1) closing an opening (2) in a wall (3) in an aircraft, said wall (3) separating a first space (4) and a second space (5), the pressures in which are at least approximately equal, it being possible for the pressure in said second space (5) to drop accidentally and violently to a very low value and said door (1) being hinged on one of its edges (6) to one side (7) of said opening (2), **characterized in that** the door possesses, on the face (1.4) immediately adjacent to said first space (4) and in the vicinity of the free edge (11) of said door (1) furthest from said hinged edge (6), at least one lip (10.2) projecting from said face (1.4) immediately adjacent to said first space (4).

2. Aircraft door according to Claim 1, **characterized in that** said projecting lip (10.2) is parallel to said free edge (11).

3. Aircraft door according to either of Claims 1 and 2, **characterized in that** the distance (d) between said projecting lip (10.2) and said free edge (11) is less than or equal to the height (s) of said projecting lip (10.2) from said face (1.4) immediately adjacent to said first space (4).

4. Aircraft door according to one of Claims 1 to 3, **characterized in that** said projecting lip (10.2) extends all the way along that dimension (H) of the door (1) which is parallel to said free edge (11).

5. Aircraft door according to one of Claims 1 to 4, **characterized in that** said projecting lip (10.2) is at least approximately perpendicular to said face (1.4) immediately adjacent to said first space (4).

6. Aircraft door according to one of Claim 1 to 5, **characterized in that** said projecting lip (10.2) belongs to an angle bar (10), the other lip (10.1) of which is placed against said face (1.4) immediately adjacent to said first space (4) and is used to fix said angle bar (10) to said door (1).
